# EUROPÄISCHE PATENTSCHRIFT

(11) **EP 3 386 097 B1**
(45) Veröffentlichungstag und Bekanntmachung des Hinweises auf die Patenterteilung: **14.09.2022**
(21) Anmeldenummer: 18165483.1
(22) Anmeldetag: 03.04.2018
(51) Int. Cl.: H02P 27/06

(54) **SCHALTUNG ZUM SELEKTIVEN VERSORGEN VON MOTOREN MIT ENERGIE**
CIRCUIT FOR SELECTIVELY SUPPLYING MOTORS WITH ENERGY
CIRCUIT D'ALIMENTATION SÉLECTIVE DES MOTEURS EN ÉNERGIE

(30) Priorität: 03.04.2017 DE 102017107125
(43) Veröffentlichungstag der Anmeldung: 10.10.2018
(73) Patentinhaber: WITTENSTEIN SE, 97999 Igersheim (DE)
(72) Erfinder: Barth, Oliver, 97990 Weikersheim (DE)
(74) Vertreter: Zimmermann & Partner Patentanwälte mbB

(56) Entgegenhaltungen:
- DE-A1-102007 052 232

## Beschreibung

### Gebiet der Erfindung

Die Erfindung betrifft eine Schaltung zum selektiven Versorgen eines Motors einer Mehrzahl von Motoren mit Energie und eine Verwendung einer Schaltung zum selektiven Versorgen eines ausgewählten Motors einer Mehrzahl von Motoren mit Energie.

### Stand der Technik

Im Stand der Technik werden oftmals mehrere Motoren über einen einzelnen Umrichter betrieben, welcher beispielsweise das Drehmoment, die Drehzahl oder die Position des jeweiligen Motors steuert oder regelt. Dies kann insbesondere dann der Fall sein, wenn die jeweiligen Motoren nicht gleichzeitig betrieben werden müssen. In anderen Fällen kann es sogar vorteilhaft sein, wenn die jeweiligen Motoren nicht gleichzeitig betrieben werden können. So sollen gemäß eines Beispiels Antriebe von Maschinen mit Positionierungsachsen nicht gleichzeitig mit Motoren für Schutztüren oder Werkzeugwechslern bewegt werden.

Um die Motoren einzeln mit dem Umrichter elektrisch zu verbinden oder zu trennen, werden beispielsweise elektromechanische Relais mit Einzelkontakten für jede Motorphase verwendet.

Elektromechanische Relais können jedoch teuer sein und weisen ein großes Bauvolumen auf. Zusätzlich können die mechanischen Kontakte mit zunehmender Betriebsdauer verschleißen. Bei Schaltvorgängen mit hohen Strömen besteht weiterhin die Gefahr eines Verschweißens der elektrischen Kontakte.

Elektronische Schalter, welche auch als Halbleiterschalter oder Solid-State-Relais bezeichnet werden können, haben den Vorteil, dass sie keine mechanischen Schaltkontakte aufweisen und somit prell- und verschleißfrei geschalten werden können.

Allgemein muss ein Schalter zum elektrischen Verbinden und Trennen eines Motors dafür ausgelegt sein, den Stromfluss sicher zu trennen. Als Halbleiterschalter können beispielsweise Feldeffekttransistoren (FET) eingesetzt werden. FETs sperren den Strom in einer Stromrichtung und sind in der anderen Stromrichtung selbst in ihrem Sperrzustand weiterhin leitend. Um einen Strom in beide Richtungen zu trennen bzw. zu sperren, werden im Stand der Technik zwei FETs in Serie geschalten und so angeordnet, dass der erste FET den Stromfluss in einer Richtung und der zweite FET den Stromfluss in der jeweils anderen Richtung sperrt. Dies wird oftmals als "back-to-back"-Anordnung bezeichnet.

Dies führt einerseits zu einer großen Bauform und hohem Aufwand für die Schaltung. Andererseits treten zusätzliche elektrische Verluste auf, da der Strom durch zwei Halbleiterschalter fließen muss.

Aus der DE 10 2007 052 232 A1 ist eine Schaltung zum selektiven Versorgen genau eines Motors einer Mehrzahl von Motoren mit Energie gemäß dem Oberbegriff des unabhängigen Anspruchs bekannt.

### Offenbarung der Erfindung

Aufgabe der Erfindung ist es, die Probleme aus dem Stand der Technik, zumindest teilweise, zu lösen. Insbesondere ist es Aufgabe der Erfindung, eine selektive Ansteuerung mehrerer Motoren bereitzustellen, welche ein Betreiben mit möglichst geringen elektrischen Verlusten ermöglicht. Die Schaltung sollte eine einfache, kompakte Bauform aufweisen.

Die Aufgabe wird mit der Schaltung nach Anspruch 1 und einer Verwendung gemäß Anspruch 12 gelöst. Ein Aspekt der Erfindung betrifft eine Schaltung zum selektiven Versorgen genau eines Motors einer Mehrzahl von Motoren mit Energie. Die Energie wird typischerweise von genau einem Umrichter bereitgestellt, wie etwa von einem Umrichter der als Frequenzumrichter oder Verstärker ausgeführt ist. Die Schaltung weist genau einen mehrphasigen Umrichteranschluss auf, zum Anschluss genau eines Umrichters. Der Umrichter ist üblicherweise dazu ausgelegt eine eingehende Wechselspannung in eine in Frequenz und/oder Amplitude unterschiedliche ausgehende Wechselspannung umzuwandeln. Der Umrichter kann jedoch auch als ein Wechselrichter ausgeführt sein oder diesen umfassen, wobei der Wechselrichter typischerweise dazu ausgelegt ist einen Gleichstrom in einen Wechselstrom umzurichten.

Die Schaltung umfasst eine Mehrzahl mehrphasiger Motoranschlüsse zum Anschließen von Motoren, wie beispielsweise mehrphasige Motoren, insbesondere zum Anschließen von dreiphasigen Motoren. Gemäß der Erfindung ist vorgesehen, genau einen Umrichter für mehrere nicht gleichzeitig betriebene Motoren bereitzustellen. Entsprechend können mehrere Motoren über nur einen Umrichter betrieben werden, was zu geringeren Kosten führen kann oder zu einem geringerem Wartungseinsatz.

Weiterhin weist die Schaltung eine Mehrzahl elektrischer Verbindungen auf, wobei jede der elektrischen Verbindungen jeweils mehrere Phasenleitungen umfasst. So kann beispielsweise ein mehrphasiger Strom über die jeweilige elektrische Verbindung übertragen werden.

Gemäß der Erfindung ist in jeder Phasenleitung einer elektrischen Verbindung jeweils genau ein MOSFET zum selektiven Schalten der jeweiligen Phasenleitung angeordnet. Dadurch, dass lediglich genau ein MOSFET verwendet wird und nicht beispielsweise zwei, verringert sich der Aufwand zum Bau der Schaltung. Der Begriff "MOSFET" schließt in der vorliegenden Erfindung insbesondere auch Leistungs-MOSFETs mit ein. Ein jeweiliger MOSFET kann so beispielsweise einen Stromfluss in der jeweiligen Phasenleitung schalten.

Jede der elektrischen Verbindungen ist ferner mit dem Umrichteranschluss verbunden, wobei jeweils genau eine der elektrischen Verbindungen mit genau einem der Motoranschlüsse verbunden ist. MOSFETs weisen den Vorteil auf, dass sie nahezu leistungslos geschalten werden können, da der zu leitende Stromfluss spannungsgesteuert ist.

Ein Stromfluss wird üblicherweise durch ein Gate-Potential, z.B. durch Anlegen einer Spannung am Gate, beeinflusst. Durch entsprechende Wahl der Spannung am Gate, kann der MOSFET einen Strom schalten. Typischerweise weisen MOSFETs eine herstellungsbedingte intrinsische Body-Diode auf, welche eine Sperrrichtung und eine nicht-schaltbare Durchlassrichtung aufweist. Die nicht-schaltbare Durchlassrichtung der Body-Diode führt dazu, dass ein MOSFET Strom in nur einer Richtung sperren kann. Die andere Richtung bleibt, auch bei nicht-geschaltetem MOSFET, leitend.

Leistungsschalter, die einen Strom bidirektional leiten und bidirektional sperren können sind insbesondere bei Wechselstromanwendungen, wie beispielsweise das Betreiben eines Wechselstrommotors, erforderlich. Solid-State-Relais für Wechselstromanwendungen weisen in nicht-erfindungsgemäßen Anwendungen oftmals eine back-to-back Anordnung auf, d.h. es werden jeweils zwei MOSFETs in entgegengesetzter Sperrrichtung der Body-Diode in Serie angeordnet.

In der vorliegenden Erfindung ist in jeder Phasenleitung einer elektrischen Verbindung genau ein MOSFET angeordnet. Eine elektrische Verbindung umfasst typischerweise mehrere Phasenleitungen für jede Phase eines mehrphasigen Stroms. Bei den Motoren, welche mit erfindungsgemäßen Schaltungen betrieben werden, treffen sich die Phasen, bspw. 3 Phasen, in einem Punkt, nachfolgend Sternpunkt genannt. Im Betrieb heben sich typischerweise die Ströme im Sternpunkt auf. Mehrphasige Motoren, insbesondere Drehstrommotoren, weisen typischerweise einen Sternpunkt auf, da die freien Enden der Motorwicklungen mit den Außenleitern verbunden sind. Auch bei lediglich einem gesperrtem oder nicht-geschaltetem MOSFET pro Phasenleitung kann kein nennenswerter Strom in einen am Motoranschluss angeschlossenen Motor hinein oder hinaus fließen, da bei Sperren der MOSFETs in allen Phasen kein geschlossener Stromkreis vorliegt. Dies bedeutet insbesondere, dass jeweils nur ein MOSFET zum Verbinden oder Trennen eines Stroms in der jeweiligen Phasenleitung benötigt wird. Dadurch kann eine kompaktere Bauform erreicht werden, welche zusätzlich kostengünstig sein kann.

Ein weiterer Aspekt betrifft eine Verwendung einer Schaltung in einer der hierin beschriebenen typischen Ausführungsformen zum selektiven Versorgen eines ausgewählten Motors einer Mehrzahl von Motoren mit Energie.

Die Erfindung betrifft Schaltungen zum Ansteuern von mehreren Motoren. Das Ansteuern umfasst ein selektives Versorgen eines ausgewählten Motors mit Energie. Die Schaltung kann insbesondere als Motorsteuerung ausgeführt sein zur Steuerung von mehrphasigen Motoren, wie beispielsweise Asynchronmotoren für Transport- und Förderanwendungen oder Synchronmotoren für nicht gleichzeitig betriebene Achsen in Werkzeugmaschinen. Bei typischen Ausführungsformen der Erfindung weist die Schaltung ein Steuermodul auf. Das Steuermodul ist eingerichtet, um selektiv die MOSFETs genau einer elektrischen Verbindung zu schalten. Das Steuermodul umfasst typischerweise eine Mehrzahl von Steueranschlüssen. Einer der Steueranschlüsse des Steuermoduls kann beispielsweise mit einem Gate-Anschluss eines MOSFETs verbunden werden. Typischerweise weist das Steuermodul eine Spannungsquelle auf, welche eine zum Schalten des MOSFETs ausreichende Spannung zur Verfügung stellt. Das Steuermodul kann die Spannungsquelle mit einem MOSFET verbinden, z.B. über einen Schalter. Insbesondere kann über das Steuermodul die Spannungsquelle selektiv mit allen MOSFETs von genau einer elektrischen Verbindung verbunden werden. Dies hat den Vorteil, dass alle MOSFETs von genau einer elektrischen Verbindung mit nur einem Steueranschluss geschalten werden können.

Das Steuermodul kann für jeden Steueranschluss beispielsweise zwei Schaltstellungen bereitstellen. In der ersten Schaltstellung können alle MOSFETs von genau einer elektrischen Verbindung mit einer Spannung versorgt werden. In der zweiten Schaltstellung ist die Spannungsquelle mit einem Erdpotential oder einem Massepotential verbunden. Die Verbindung der Spannungsquelle mit den MOSFETs ist in der zweiten Schaltstellung getrennt.

Bei typischen Ausführungsformen der Erfindung können die Gates der MOSFETs jeweils aller Phasenleitungen von genau einer der elektrischen Verbindungen mit genau einem Steueranschluss des Steuermoduls verbunden werden. Das Steuermodul stellt eine zum Schalten des MOSFETs ausreichende Spannung zur Verfügung. Wenn das Steuermodul das Gate eines MOSFETs mit der Spannungsquelle verbindet, wird der MOSFET stromleitend. Mit anderen Worten, der MOSFET ist geschaltet. Ein Vorteil besteht darin, dass der geschaltete MOSFET Wechselstrom leiten kann. Beispielsweise kann dadurch ein am Motoranschluss angeschlossener Wechselstrommotor mit Strom versorgt werden.

In typischen Ausführungsformen der Erfindung können die Gates der MOSFETs jeweils aller Phasenleitungen pro elektrischer Verbindung mit jeweils genau einem Steueranschluss der Mehrzahl der Steueranschlüsse des Steuermoduls verbunden werden. Zum Schalten von mehr als einem MOSFET über nur eine Spannungsquelle wird üblicherweise ein Treiber verwendet. In erfindungsmäßen Schaltungen wird eine Bootstrap-Schaltung als Treiber eingesetzt, und das Steuermodul weist eine Bootstrap-Schaltung auf. Die zum Schalten der MOSFETs benötigte Spannung kann so über die Bootstrap-Schaltung gewonnen werden.

Bei typischen Ausführungsformen der Erfindung sind jeweils alle Source-Anschlüsse der MOSFETs von zumindest einer der elektrischen Verbindungen entweder mit dem jeweiligen Motoranschluss oder mit dem Umrichteranschluss der elektrischen Verbindung verbunden. Die MOSFETs der jeweiligen elektrischen Verbindung können in gleicher Richtung ausgerichtet sein. Beispielsweise können in einer ersten elektrischen Verbindung alle Source-Anschlüsse mit einem ersten Motoranschluss verbunden sein, wobei in der ersten elektrischen Verbindung die MOSFETs als n-Kanal-MOSFETs ausgeführt sind. In einer zweiten elektrischen Verbindung können beispielsweise alle Drain-Anschlüsse eines p-Kanal-MOSFETs mit einem zweiten Motoranschluss verbunden sein. Typische Ausführungsformen weisen den Vorteil auf, dass in einer elektrischen Verbindung alle intrinsischen Body-Dioden der MOSFETs gleich ausgerichtet sind, wodurch bei nicht-geschaltetem MOSFET kein geschlossener Stromkreis vorliegt.

In typischen Ausführungsformen sind die jeweiligen Drain-Anschlüsse mit dem jeweils anderen des Motoranschlusses und des Umrichteranschlusses verbunden. Gemäß der Erfindung sind in zumindest einer der elektrischen Verbindungen jeweils alle Source-Anschlüsse der MOSFETs mit dem jeweiligen Motoranschluss verbunden. Beispielsweise können für das Betreiben eines ersten dreiphasigen Motors alle drei MOSFETs in einer ersten elektrischen Verbindung gleich ausgerichtet werden, so dass bei allen drei MOSFETs der Source-Anschluss zum ersten Motor und der Drain-Anschluss zum Umrichter zeigt oder umgekehrt. Diese Anordnung kann für das Betreiben eines zweiten dreiphasigen Motors wiederholt werden. Wird eine ausreichend hohe Spannung an das Gate der drei MOSFETs der ersten elektrischen Verbindung angelegt, werden diese bidirektional leitend. Der erste dreiphasige Motor kann betrieben werden.

Legt man die Gate-Spannung auf ein ausreichend niedriges Potential bzw. niedrige Spannung, sperren die drei MOSFETs der ersten elektrischen Verbindung. Die intrinsische Body-Diode eines MOSFETs würde zwar weiterhin einen Phasenstrom leiten, aber bedingt durch den dreiphasigen Aufbau der Motorwicklungen eines dreiphasigen Motors kann weder ein Strom in den Motor hinein- noch hinausfließen. Der erste dreiphasige Motor ist also durch die gleich ausgerichteten nichtgeschalteten MOSFETs elektrisch vom Umrichter getrennt. Der zweite dreiphasige Motor kann nun zugeschaltet und vom Umrichter betrieben werden. Ausführungsformen der erfindungsgemäßen Schaltung weisen typischerweise MOSFETs mit möglichst geringen Durchlasswiderstand auf. Die elektrischen Verluste beim Betreiben der Schaltung können so minimiert werden. Typischerweise weisen die MOSFETs eine minimal notwendige Spannungsfestigkeit auf. Die notwendige Spannungsfestigkeit kann beispielsweise gemäß der höchsten auftretenden Spannung beim Betrieb der mehreren Motoren gewählt werden. Die Spannungsfestigkeit ist typischerweise so gewählt, dass ein sicherer Betrieb bei den höchsten auftretenden Spannungen ermöglicht wird. Oftmals tritt die höchste Spannung auf, wenn einer der mehreren Motoren generatorisch betrieben wird oder er angetrieben wird und Leistung zurückspeist. Hohe Spannungsspitzen können beispielsweise auch durch die Pulsweitenmodulation (PWM) eines Umrichters entstehen, wie z.B. bei einem schnellen Spannungswechsel oder bei einer Überschwingung des PWM-Signals.

Typische Ausführungsformen der Erfindung weisen einen Überspannungsbegrenzer auf. Der Überspannungsbegrenzer kann die Spannung, die an einem jeweiligen MOSFET zwischen Drain und Source anliegt, begrenzen. Typische Überspannungsbegrenzer umfassen beispielsweise Varistoren oder Suppressor-Dioden, insbesondere bidirektionale Suppressor-Dioden, welche beim Überschreiten einer zu begrenzenden Spannung in Sperrrichtung leitend werden. Zu begrenzende Spannungen umfassen insbesondere Spannungen die bei Störungen oder bei Schalten der Phasenströme kurzzeitig auftreten. Spannungsspitzen die zwischen den Anschlüssen des MOSFET auftreten könnten, können so am MOSFET vorbei geleitet werden. Beispielsweise können die aus den Spannungsspitzen resultierenden Ströme über den Überspannungsbegrenzer auf ein Massepotential abgeleitet werden. Eine Beschädigung des MOSFETs kann verhindert oder minimiert werden.

In typischen Ausführungsformen kann der Überspannungsbegrenzer bei mindestens einem MOSFET mit dem Drain-Anschluss des MOSFETs verbunden sein. Alternativ oder zusätzlich kann ein weiterer Überspannungsbegrenzer mit dem Source-Anschluss des MOSFETS verbunden sein. Der Überspannungsbegrenzer kann beispielsweise einen Anschluss des MOSFETs mit einem Massepotential verbinden, wobei diese Verbindung bei Überschreiten der zu begrenzenden Spannungsspitze leitend wird.

In weiteren typischen Ausführungsformen, die mit den hierin beschriebenen Ausführungsformen kombiniert werden können, ist mindestens ein MOSFET durch einen Überspannungsfilter überbrückt. Der Überspannungsfilter ist typischerweise sowohl mit dem Gate-Anschluss, als auch mit dem Source-Anschluss eines entsprechenden MOSFETs verbunden. Der Überspannungsfilter leitet kurzzeitig aufkommende Spannungsspitzen am MOSFET vorbei und überbrückt diesen, wodurch ein zusätzlicher Schutz des MOSFETs vor Beschädigung erreicht wird. Typische Überspannungsfilter weisen Elemente wie Varistoren oder Suppressor-Dioden auf, insbesondere bidirektionale Suppressor-Dioden.

Bei typischen Ausführungsformen der Erfindung weist die Schaltung eine schaltbare Masseverbindung zu einem Massepotential auf. Die schaltbare Masseverbindung ist typischerweise mit einer Phasenleitung an einem Motoranschluss verbunden. Insbesondere können alle Phasenleitungen eines Motoranschlusses mit einer schaltbaren Masseverbindung verbunden sein. Das Schalten der schaltbaren Masseverbindung kann eine elektrisch leitende Masseverbindung zwischen Motoranschluss und Massepotential herstellen. Dies ist insbesondere dann vorteilhaft, wenn die elektrische Verbindung zwischen Umrichteranschluss und Motoanschluss getrennt ist, oder beispielsweise durch das Ansteuern der MOSFETs der jeweiligen elektrischen Verbindung getrennt wird. Ein möglicher Stromfluss von Motoranschluss in Richtung Umrichteranschluss kann durch Schalten der schaltbaren Masseverbindung auf ein Massepotential abgeleitet werden. Ein abzuleitender Stromfluss kann insbesondere dann auftreten, wenn die elektrische Verbindung zwischen Umrichter und einem betriebenen Motor getrennt wird. Durch das Schalten eines nicht-selektierten oder nicht-betriebenen Motors auf ein Massepotential, wirkt ein dynamisches Bremsmoment auf den nicht-selektierten Motor, das einer freien Drehbewegung entgegen gerichtet ist.

In typischen Ausführungsformen der Erfindung umfasst die schaltbare Masseverbindung jeweils einen Masseschalter, insbesondere jeweils einen Masseschalter für jede Phase des jeweiligen Motoranschlusses. Diese Anordnung kann auch als dynamische Bremse beschrieben werden. Masseschalter können beispielsweise als Masse-Halbleiterschalter, insbesondere MOSFET-Masseschalter, ausgeführt sein. In weiteren typischen Ausführungsformen wird der Masseschalter der schaltbaren Masseverbindung über das Steuermodul einer elektrischen Verbindung zwischen Motoanschluss und Umrichteranschluss geschalten. Das Steuermodul kann beispielsweise in einer ersten Schaltstellung die Gate-Anschlüsse der MOSFETs aller Phasenleitungen der jeweiligen elektrischen Verbindung mit der Spannungsquelle verbinden. In der ersten Schaltstellung kann ein angeschlossener Motor betrieben werden, der über einen angeschlossenen Umrichter mit Energie versorgte wird. In einer zweiten Schaltstellung kann die Verbindung zwischen Gate-Anschluss und Spannungsquelle getrennt sein, wobei in der zweiten Schaltstellung die jeweiligen Masseschalter geschalten werden. Ein selektierter Motor kann somit über das Steuermodul abgewählt, wobei die dynamische Bremse den nicht mehr selektieren Motor abbremst.

Sind die einzelnen Phasen eines nicht elektrisch betriebenen mehrphasigen Motors gegen ein Massepotential kurzgeschlossen, erzeugt eine Drehbewegung des Motors einen Strom. Oftmals wird dies als generatorischer Betrieb eines Motors bezeichnet. Die Bewegungsenergie der Drehbewegung des Motors wird in elektrische Energie umgewandelt. Die Drehbewegung verliert an Bewegungsenergie; der Motor kann abgebremst werden.

Ausführungsformen der Erfindung weisen typischerweise einen Umrichter auf, welcher an dem Umrichteranschluss angeschlossen ist. Der Umrichter, welcher auch als Verstärker bezeichnet werden kann beispielsweise als ein Frequenzumrichter ausgeführt sein. Typischerweise ist der Umrichter dazu ausgelegt, eine eingehende Wechselspannung in eine in Frequenz und/oder Amplitude unterschiedliche ausgehende Wechselspannung umzuwandeln. Der Umrichter kann jedoch auch als ein Wechselrichter ausgeführt sein oder diesen umfassen, wobei der Wechselrichter typischerweise dazu ausgelegt ist einen Gleichstrom in einen Wechselstrom umzurichten.

Typischerweise weisen Ausführungsformen der Erfindung Motoren auf, wobei an den jeweiligen Motoranschlüssen von zumindest zwei der elektrischen Verbindungen jeweils ein Motor angeschlossen ist. An einem ersten Motoranschluss kann ein erster Motor angeschlossen sein, insbesondere ein mehrphasiger Motor wie etwa Asynchron- oder Synchronmotoren, oder allgemein Drehstrommotoren. An einem zweiten Motoranschluss kann ein zweiter Motor angeschlossen sein. Der erste Motor und der zweite Motor können selektiv durch den Umrichter mit Energie versorgt werden. Typische Motoren, welche bei Ausführungsformen der Erfindung verwendet werden, weisen drei Phasen auf, welche in einer Sternschaltung oder Dreiecksschaltung verschaltet sind.

In typischen Ausführungsformen der Erfindung kann der Umrichter als Frequenzumrichter ausgeführt sein, wobei die Motoren als dreiphasige Asynchronmotoren ausgeführt sind. In anderen typischen Ausführungsformen kann der Umrichter als Servoumrichter ausgeführt sein, welcher beispielsweise eine Drehmoment-, Lage- oder Drehzahlregelung den Motoren zur Verfügung stellen kann, wobei die Motoren als dreiphasige Synchronmotoren ausgeführt sind.

Typische Ausführungsformen können wie folgend verwendet werden. Ein ausgewählter Motor einer Mehrzahl von Motoren wird selektiv mit Energie versorgt. Die zugeordneten schaltbaren Masseverbindungen an einem Motoranschluss eines nicht-ausgewählten Motors werden leitend zu einem Massepotential geschalten. Der ausgewählte Motor wird abgewählt. Ein vorher nicht-ausgewählter Motor kann nun ausgewählt und betrieben werden.

Typische Ausführungsformen weisen die Vorteile auf, dass eine Mehrzahl von Motoren, welche nicht gleichzeitig betrieben werden, selektiv mit Energie versorgt werden können. Durch die Anordnung jeweils genau eines MOSFETs in jeder Phasenleitung einer elektrischen Verbindung zwischen einem Umrichter und des ausgewählten Motors können elektrische Verluste möglichst gering gehalten werden. Ein weiterer Vorteil ist eine mögliche Verringerung der Baugröße der Steuerung.

### Kurze Beschreibung der Figuren

Nachfolgend wird die Erfindung an Hand folgender Figuren erläutert, wobei die Erfindung jedoch nicht auf die in den Figuren dargestellten Ausführungsformen beschränkt ist.
- Figur 1: zeigt eine schematisch dargestellte Schaltung gemäß einer hierin beschriebenen Ausführungsform;
- Figur 2: zeigt eine schematisch dargestellte Schaltung gemäß einer weiteren hierin beschriebenen Ausführungsform; und
- Figur 3: zeigt ein Flussdiagramm einer Verwendung einer Schaltung gemäß einer hierin beschriebenen Ausführungsform.

### Beschreibung von Ausführungsformen

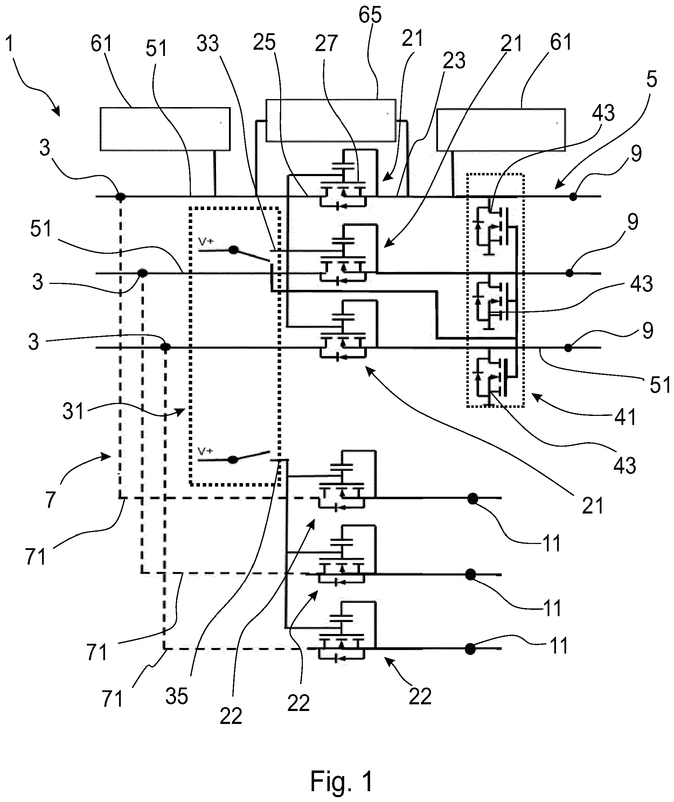

Fig. 1 zeigt schematisch eine Schaltung 1 zum selektiven Versorgen von Motoren. Die Schaltung 1 weist einen Umrichteranschluss 3 zum Anschluss eines Umrichters auf.

Eine erste elektrische Verbindung 5 umfasst eine erste Gruppe von drei Phasenleitungen 51. Eine zweite elektrische Verbindung 7 umfasst eine zweite Gruppe von drei Phasenleitungen 71. Die erste elektrische Verbindung 5 verbindet den Umrichteranschluss 3 mit einem ersten Motoranschluss 9. Jede der drei Phasenleitungen 51 der ersten Gruppe ist am Motoranschluss 9 angeschlossen. Der Motoranschluss 9 ist dreiphasig ausgeführt.

Die zweite elektrische Verbindung 7 verbindet den Umrichteranschluss 3 mit einem zweiten Motoranschluss 11. Die zweite Gruppe von drei Phasenleitungen 71 ist analog zu der ersten Gruppe von drei Phasenleitungen 51 der ersten elektrischen Verbindung 5 ausgeführt.

In jeder der ersten drei Phasenleitungen 51 ist ein MOSFET 21 angeordnet. Jeder MOSFET umfasst typischerweise einen Source-Anschluss 23, einen Drain-Anschluss 25 und ein Gate 27 Wie in Fig. 1 exemplarisch gezeigt, ist der jeweilige Source-Anschluss 23 der MOSFETs 21 mit dem ersten Motoranschluss 9 verbunden. Der jeweilige Drain-Anschluss 25 der MOSFETs 21 ist mit dem Umrichteranschluss 3 verbunden.

Über das Gate 27 kann der jeweilige MOSFET 21 geschalten werden. Die Gates 27 sind mit einem Steueranschluss 33 eines Steuermoduls 31 verbunden. Insbesondere können über das Steuermodul 31 die Gates 27 von allen drei MOSFETs 21 in den Phasenleitungen 51, vorzugsweise gemeinsam, angesteuert werden.

In weiteren typischen Ausführungsformen kann jedes Gate der MOSFETs in der jeweiligen Gruppe von Phasenleitungen einzeln angesteuert werden. Beispielsweise kann das Steuermodul für jedes Gate einen individuellen Steueranschluss aufweisen.

In Fig. 1 weist das Steuermodul 31 eine Spannungsquelle auf. Die Spannungsquelle kann beispielsweise integral mit dem Steuermodul ausgeführt sein. Alternativ kann das Steuermodul 31 mit einer externen Spannungsquelle verbunden sein. Über einen ersten Steueranschluss 33 des Steuermoduls 31 kann eine Spannung über die Spannungsquelle an die Gates 27 angelegt werden, um die MOSFETs 21 zu schalten.

Ein am ersten Motoranschluss 9 angeschlossener Motor kann durch das Steuermodul 31 durch Ansteuern der MOSFETs 21 selektiert werden. Typischerweise weist das Steuermodul 31 mehrere Steueranschlüsse auf. So können über einen zweiten Steueranschluss 35 eine zweite Gruppe MOSFETs 22 der drei zweiten Phasenleitungen 71 geschalten werden.

Wenn der Motor nicht selektiert ist, schaltet das Steuermodul 31 die Schalter einer dynamischen Bremse 41. In Fig. 1 umfasst die dynamische Bremse 41 für jede der drei Phasenleitungen 51 der ersten Gruppe einen Masseschalter 43, welcher als MOSFET-Masseschalter ausgeführt ist.

Die Masseschalter verbinden die erste Gruppe von drei Phasenleitungen 51 des ersten Motoranschlusses 9 mit einem Massepotential. In einem nicht selektierten Zustand eines angeschlossenen Motors, kann dieser abgebremst oder an einer freien Drehbewegung gehindert werden. Insbesondere kann bei einem am Motoranschluss 9 angeschlossenen und nicht-selektiertem Motor ein am Motoranschluss 11 angeschlossener weiterer Motor selektiert werden, so dass dieser betrieben werden kann.

Bei anderen typischen Ausführungsformen ist eine dynamische Bremse auch an einem zweiten Motoranschluss oder an jeweils allen Motoranschlüssen vorgesehen. Beispielsweise kann dadurch ein erster Motor am ersten Motoranschluss selektiv betrieben werden, während ein zweiter Motor oder alle weiteren Motoren an einer freien Drehbewegung gehindert werden können durch Schalten der jeweiligen dynamischen Bremse.

In der in Fig. 1 gezeigten Ausführungsform weist eine der drei Phasenleitungen 51 der ersten Gruppe einen Überspannungsbegrenzer 61 auf.

Bei typischen Ausführungsbeispielen ist ein Überspannungsbegrenzer in mehr als einer Phasenleitung einer elektrischen Verbindung angeordnet. Beispielsweise kann ein Überspannungsbegrenzer in jeder Phasenleitung vorgesehen sein.

In Fig. 1 ist ein Überspannungsbegrenzer 61 mit dem Source-Anschluss 23 des MOSFETs 21 verbunden. Ein weiterer Überspannungsbegrenzer 61 ist mit dem Drain-Anschluss 25 des MOSFETs 21 verbunden.

Ein Überspannungsfilter 65 überbrückt den MOSFET 21. Der Überspannungsfilter 65 ist mit dem Drain-Anschluss 25 und mit dem Source-Anschluss 63 verbunden. Bei einer zu begrenzenden Spannungsspitze kann der Überspannungsfilter 65 einen Strom am MOSFET 21 vorbei leiten.

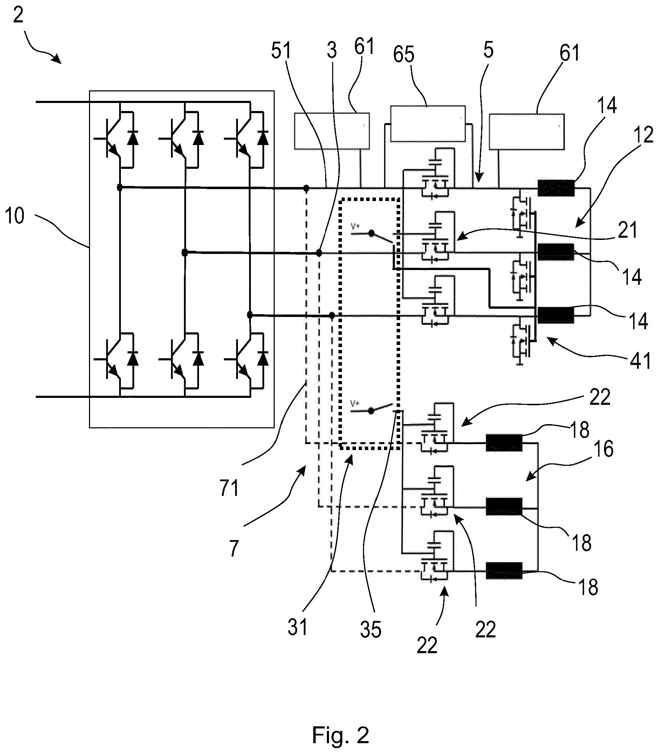

Fig. 2 zeigt schematisch eine Schaltung 2 gemäß den hierin beschriebenen Ausführungsformen. In Fig. 2 bezeichnen gleiche Bezugszeichen gleiche oder ähnliche Teile wie bei dem Ausführungsbeispiel der Fig. 1. Nicht alle bereits im Zusammenhang mit der Fig. 1 beschriebenen Teile werden im Zusammenhang mit der Fig. 2 nochmal beschrieben. Zur einfacheren Übersicht ist in Fig. 2 jeweils nur eine der ersten drei Phasenleitungen 51 und jeweils nur eine der drei zweiten Phasenleitungen 71 mit einem Bezugszeichen versehen.

In Fig. 2 sind Motoren schematisch durch Spulen dargestellt. Ein erster Motor 12 ist in Fig. 2 am ersten Motoranschluss 9 (Fig. 1) angeschlossen. Der erste Motor 12 umfasst für jede der drei Phasenleitungen 51 der ersten Gruppe eine Spule 14. Jede der Spulen 14 ist jeweils mit genau einer der drei Phasenleitungen 51 verbunden. Ein analog zu dem ersten Motor 12 aufgebauter zweiter Motor 16 ist am zweiten Motoranschluss 11 (Fig. 1) angeschlossen. Der zweite Motor 16 umfasst für jeder der drei Phasenleitungen 71 der zweiten Gruppe eine zweite Spule 18.

Ein am Umrichteranschluss 3 angeschlossener Umrichter 10 ist dazu ausgelegt, den ersten Motor 12 und den zweiten Motor 16 selektiv mit Energie zu versorgen.

Im Allgemeinen steht für jeden Motor eine elektrische Verbindung bereit, welche jeweils drei Phasenleitungen für die einzelnen Phasen der Wechselstromspannung umfasst.

In Fig. 2 ist nur einer der drei MOSFETs 21 mit einem Bezugszeichen versehen, um eine einfache Übersicht zu gewähren, auch wenn mit den jeweiligen Bezugszeichen alle MOSFETs der ersten Phasenleitungen 51 bezeichnet werden. Das Auswählen des jeweiligen Motors erfolgt über das Steuermodul 31. Das Steuermodul 31 kann beispielsweise die MOSFETs 21 der drei ersten Phasenleitungen 51 ansteuern, um den ersten Motor 12 zu betreiben. In diesem Zustand ist der zweite Motor 16 nichtselektiert, d.h. er wird nicht betrieben. Das Steuermodul 31 kann bei selektiertem erstem Motor 12 die Spannungszufuhr an den Gates 27 der MOSFETs 21 unterbrechen, so dass der erste Motor 12 nicht mehr selektiert ist. In diesem nicht-selektierten Zustand liegt in der ersten elektrischen Verbindung 5 kein geschlossener Stromkreis vor. Der erste Motor 12 wird nicht mehr mit Energie über den Umrichter 10 versorgt. Das Steuermodul 31 kann so dann die zweite Gruppe von MOSFETs 22 der zweiten drei Phasenleitungen 71 ansteuern. Über den Steueranschluss 35 können insbesondere die Gates der MOSFETs 22 der zweiten Gruppe von drei Phasenleitungen 71 mit der Spannungsquelle des Steuermoduls 31 verbunden werden. Der zweite Motor 16 kann nun über den Umrichter 10 betrieben werden.

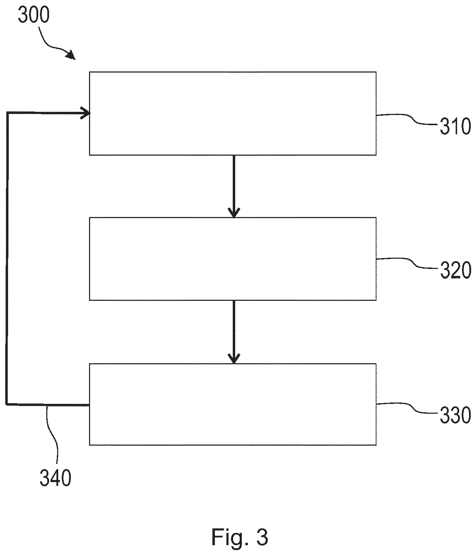

In Fig. 3 ist eine Verwendung 300 einer Schaltung gemäß einer hierin beschriebenen Ausführungsform als ein Flussdiagramm dargestellt.

Durch Ansteuern der MOSFETs in einer der Mehrzahl der elektrischen Verbindungen wird ein Motor einer Mehrzahl von Motoren mit Energie versorgt (Box 310). Das Ansteuern erfolgt in Fig. 3 über ein Steuermodul das jeweils alle MOSFETs in der einen der Mehrzahl der elektrischen Verbindungen schaltet. Jede der Mehrzahl der elektrischen Verbindungen umfasst gemäß der in Fig. 3 beschriebenen typischen Ausführungsform jeweils drei Phasenleitungen. Die Energie wird von genau einem Umrichter bereitgestellt. Insbesondere wird ein dreiphasiger Wechselstrom zum Betreiben eines dreiphasigen Motors bereitgestellt. Der selektierte Motor wird betrieben.

In einem nächsten Schritt werden über das Steuermodul die MOSFETs in der einen elektrischen Verbindung des in 310 betriebenen Motors nun nicht mehr angesteuert (Box 320). Mit anderen Worten, die MOSFETs sind nun nicht mehr durchgeschaltet. Der in 310 betriebene Motor wird nicht mehr mit Energie versorgt. Der Motor ist abgewählt bzw. nicht mehr selektiert.

In einem weiteren Schritt werden die schaltbaren Masseverbindungen am Motoranschluss des in 320 nicht mehr betriebenen Motors mit zu einem Massepotential verbunden (Box 330). Das Schalten der Masseverbindungen kann gleichzeitig mit dem Abwählen eines Motors erfolgen.

In der Verwendung 300 wird zuerst die Energieversorgung des betriebenen Motors unterbrochen. Danach werden über das Steuermodul die Schalter der schaltbaren Masseverbindung in den Phasenleitungen des Motoranschluss des abgewählten Motors geschalten. Die drei Motorphasen sind in 330 jeweils mit einem Massepotential verbunden. Ein durch den Motor erzeugter Strom, z.B. durch ein generatorisches Betreiben, kann über die Masseverbindung abgeleitet werden. Der Motor wird abgebremst und an einer freien Drehbewegung gehindert.

Der Umrichter ist in 330 bereit, einen Motor erneut mit Energie zu versorgen. Dies kann, wie in Fig. 3 durch das Bezugszeichen 340 dargestellt, der zuvor in 310 betriebene Motor sein. In typischen Ausführungsformen wird nach dem Abwählen eines betriebenen Motors ein anderer der Mehrzahl der Motoren selektiert.

Typischerweise umfasst das Abwählen eines Motors ein Schalten der Masseschalter der am Motoranschluss des abgewählten Motors angeordneten dynamischen Bremse. Insbesondere erfolgt das Schalten der Masseschalter über das Steuermodul. So kann beispielsweise in einem Schaltvorgang ein Motor abgewählt und über die Masseschalter der dynamischen Bremse mit einem Massepotential verbunden werden.

## Patentansprüche

1. Schaltung (1) zum selektiven Versorgen genau eines Motors einer Mehrzahl von Motoren (12, 16) mit Energie, welche von genau einem Umrichter (10) bereitgestellt wird, mit
- einer Mehrzahl mehrphasiger Motoranschlüsse (9, 11) zum Anschließen von mehrphasigen Motoren (12, 16);
- genau einem mehrphasigen Umrichteranschluss (3) zum Anschluss genau eines Umrichters (10),
- einer Mehrzahl elektrischer Verbindungen (5, 7),
∘ wobei jede der elektrischen Verbindungen (5, 7) jeweils mehrere Phasenleitungen (51, 71) umfasst,
∘ wobei jede der elektrischen Verbindungen (5, 7) mit dem Umrichteranschluss (3) verbunden ist, und
∘ wobei jeweils genau eine der elektrischen Verbindungen (5, 7) mit genau einem der Motoranschlüsse (9, 11) verbunden ist,
- wobei in jeder Phasenleitung (51, 71) einer elektrischen Verbindung (5, 7) jeweils genau ein MOSFET (21, 22) zum selektiven Schalten der jeweiligen Phasenleitung angeordnet ist;
**dadurch gekennzeichnet, dass**
die Motoren (12, 16) jeweils einen Sternpunkt aufweisen, in dem sich die mehreren Phasen des jeweiligen Motors (12, 16) treffen,
wobei in zumindest einer der elektrischen Verbindungen (5, 7) jeweils alle Source-Anschlüsse (23) der MOSFETs (21, 22) mit dem jeweiligen Motoranschluss (9, 11) verbunden sind,
und wobei das Steuermodul (31) eine Bootstrap-Schaltung aufweist.

2. Schaltung (1) nach einem der vorhergehenden Ansprüche mit einem Steuermodul (31) mit einer Mehrzahl von Steueranschlüssen (33), welches eingerichtet ist, um selektiv die MOSFETs (21, 22) genau einer elektrischen Verbindung (5, 7) zu schalten.

3. Schaltung (1) nach Anspruch 2, wobei die Gates (27) der MOSFETs (21, 22) jeweils aller Phasenleitungen (51, 71) von genau einer der elektrischen Verbindungen (5, 7) mit genau einem Steueranschluss des Steuermoduls (31) verbunden sind.

4. Schaltung (1) nach einem der vorhergehenden Ansprüche, wobei die Gates (27) der MOSFETs (21, 22) jeweils aller Phasenleitungen (51, 71) pro elektrischer Verbindung (5, 7) mit jeweils genau einem Steueranschluss der Mehrzahl der Steueranschlüsse (33) des Steuermoduls (31) verbunden sind.

5. Schaltung (1) nach einem der vorhergehenden Ansprüche, wobei jeweils alle Source-Anschlüsse (23) der MOSFETs (21, 22) von zumindest einer der elektrischen Verbindungen (5, 7) entweder mit dem jeweiligen Motoranschluss (9, 11) oder mit dem Umrichteranschluss (3) der elektrischen Verbindung (5, 7) verbunden sind.

6. Schaltung (1) nach Anspruch 5, wobei die jeweiligen Drain-Anschlüsse (25) mit dem jeweils anderen des Motoranschlusses (9, 11) und des Umrichteranschlusses (3) verbunden sind.

7. Schaltung (1) nach einem der vorhergehenden Ansprüche, wobei bei mindestens einem MOSFET (21, 22) jeweils ein Überspannungsbegrenzer (61) mit dem Drain-Anschluss (25) und/oder mit dem Source-Anschluss (23) des MOSFETS (21, 22) verbunden ist.

8. Schaltung (1) nach einem der vorhergehenden Ansprüche, wobei mindestens ein MOSFET (21, 22) durch einen Überspannungsfilter (65) überbrückt ist.

9. Schaltung (1) nach einem der vorhergehenden Ansprüche, wobei die Phasenleitungen (51, 71) an den Motoranschlüssen (9, 11) jeweils mit einer schaltbaren Masseverbindung (43) zu einem Massepotential verbunden sind.

10. Schaltung (1) nach einem der vorhergehenden Ansprüche, mit einem Umrichter (10), welcher an dem Umrichteranschluss (3) angeschlossen ist, und Motoren (14, 16), wobei an den jeweiligen Motoranschlüssen (9, 11) von zumindest zwei der elektrischen Verbindungen (5, 7) jeweils ein Motor angeschlossen ist.

11. Schaltung (1) nach Anspruch 10, wobei der Umrichter (10) entweder als Frequenzumrichter und die Motoren (12, 16) als dreiphasige Asynchronmotoren, oder der Umrichter als Servoumrichter und die Motoren als dreiphasige Synchronmotoren ausgeführt sind.

12. Verwendung einer Schaltung (1) nach einem der vorhergehenden Ansprüche zum selektiven Versorgen eines ausgewählten Motors einer Mehrzahl von Motoren (12, 16) mit Energie.

13. Verwendung nach Anspruch 12, wobei die einem Motoranschluss (9, 11) zumindest eines weiteren, nicht ausgewählten Motors, zugeordneten schaltbaren Masseverbindungen (43) leitend zu einem Massepotential geschaltet werden.

## Claims

1. Circuit (1) for selectively supplying exactly one motor of a plurality of motors (12, 16) with energy provided by exactly one converter (10), comprising
- a plurality of multi-phase motor terminals (9, 11) for connecting multi-phase motors (12, 16);
- exactly one multi-phase converter terminal (3) for connecting exactly one converter (10),
- a plurality of electrical connections (5, 7),
∘ each of the electrical connections (5, 7) comprising a plurality of phase lines (51, 71),
∘ each of the electrical connections (5, 7) being connected to the converter terminal (3), and
∘ exactly one of the electrical connections (5, 7) being connected to exactly one of the motor terminals (9, 11) in each case,
- exactly one MOSFET (21, 22), for selectively switching the relevant phase line, being arranged in each phase line (51, 71) of an electrical connection (5, 7);
**characterised in that**
the motors (12, 16) each have a star point in which the plurality of phases of the relevant motor (12, 16) meet,
all of the source terminals (23) of the MOSFETs (21, 22) being connected to the relevant motor terminal (9, 11) in at least one of the electrical connections (5, 7),
and the control module (31) having a bootstrap circuit.

2. Circuit (1) according to any of the preceding claims, comprising a control module (31) having a plurality of control terminals (33), which module is configured to selectively switch the MOSFETs (21, 22) of exactly one electrical connection (5, 7).

3. Circuit (1) according to claim 2, wherein the gates (27) of the MOSFETs (21, 22) of all phase lines (51, 71) of exactly one of the electrical connections (5, 7) are each connected to exactly one control terminal of the control module (31).

4. Circuit (1) according to any of the preceding claims, wherein the gates (27) of the MOSFETs (21, 22) of all phase lines (51, 71) per electrical connection (5, 7) are each connected to exactly one control terminal of the plurality of control terminals (33) of the control module (31).

5. Circuit (1) according to any of the preceding claims, wherein all the source terminals (23) of the MOSFETs (21, 22) of at least one of the electrical connections (5, 7) are connected either to the relevant motor terminal (9, 11) or to the converter terminal (3) of the electrical connection (5, 7).

6. Circuit (1) according to claim 5, wherein the respective drain terminals (25) are connected to the relevant other motor terminal (9, 11) and the converter terminal (3).

7. Circuit (1) according to any of the preceding claims, wherein in the case of at least one MOSFET (21, 22), an excess voltage limiter (61) is connected to the drain terminal (25) and/or to the source terminal (23) of the MOSFET (21, 22).

8. Circuit (1) according to any of the preceding claims, wherein at least one MOSFET (21, 22) is bridged by an excess voltage filter (65).

9. Circuit (1) according to any of the preceding claims, wherein the phase lines (51, 71) at the motor terminals (9, 11) are each connected to a switchable ground connection (43) to a ground potential.

10. Circuit (1) according to any of the preceding claims, comprising a converter (10) which is connected to the converter terminal (3), and motors (14, 16), in each case one motor being connected to the respective motor terminals (9, 11) of at least two of the electrical connections (5, 7).

11. Circuit (1) according to claim 10, wherein the converter (10) is designed either as a frequency converter and the motors (12, 16) are designed as three-phase asynchronous motors, or the converter is designed as a servo converter and the motors are designed as three-phase synchronous motors.

12. Use of a circuit (1) according to any of the preceding claims for selectively supplying a selected motor of a plurality of motors (12, 16) with energy.

13. Use according to claim 12, wherein the switchable ground connections (43) associated with a motor terminal (9, 11) of at least one further, unselected motor are conductively connected to a ground potential.

## Revendications

1. Circuit (1) destiné à alimenter sélectivement en énergie exactement un moteur d'une pluralité de moteurs (12, 16), laquelle énergie est fournie par exactement un convertisseur (10), comportant
- une pluralité de connexions de moteur (9, 11) multiphasées permettant de connecter des moteurs multiphasés (12, 16) ;
- exactement une connexion de convertisseur (3) multiphasée permettant de connecter exactement un convertisseur (10),
- une pluralité de liaisons électriques (5, 7),
∘ chacune des liaisons électriques (5, 7) comprenant respectivement plusieurs lignes de phase (51, 71),
∘ chacune des liaisons électriques (5, 7) étant reliée à la connexion de convertisseur (3) et
∘ respectivement exactement l'une des liaisons électriques (5, 7) étant reliée à exactement l'une des connexions de moteur (9, 11),
- respectivement exactement un MOSFET (21, 22) permettant la commutation sélective de la ligne de phase respective étant disposé dans chaque ligne de phase (51, 71) d'une liaison électrique (5, 7) ;
**caractérisé en ce que** les moteurs (12, 16) présentent respectivement un point neutre dans lequel les plusieurs phases du moteur (12, 16) respectif se rencontrent, respectivement toutes les connexions source (23) des MOSFET (21, 22) étant reliées à la connexion de moteur (9, 11) respective dans au moins l'une des liaisons électriques (5, 7),
et le module de commande (31) présentant un circuit de type bootstrap.

2. Circuit (1) selon l'une des revendications précédentes, comportant un module de commande (31) comportant une pluralité de connexions de commande (33), lequel module est configuré pour commuter sélectivement les MOSFET (21, 22) d'exactement une connexion électrique (5, 7).

3. Circuit (1) selon la revendication 2, les grilles (27) des MOSFET (21, 22) de respectivement toutes les lignes de phase (51, 71) d'exactement l'une des liaisons électriques (5, 7) étant reliées à exactement une connexion de commande du module de commande (31).

4. Circuit (1) selon l'une des revendications précédentes, les grilles (27) des MOSFET (21, 22) de respectivement toutes les lignes de phase (51, 71) par liaison électrique (5, 7) étant reliées à respectivement exactement une connexion de commande de la pluralité de connexions de commande (33) du module de commande (31).

5. Circuit (1) selon l'une des revendications précédentes, respectivement toutes les connexions source (23) des MOSFET (21, 22) d'au moins l'une des liaisons électriques (5, 7) étant reliées soit à la connexion de moteur (9, 11) respective, soit à la connexion de convertisseur (3) de la liaison électrique (5, 7).

6. Circuit (1) selon la revendication 5, les connexions drain respectives (25) étant reliées à l'autre connexion respective parmi la connexion de moteur (9, 11) et la connexion de convertisseur (3).

7. Circuit (1) selon l'une des revendications précédentes, pour au moins un MOSFET (21, 22), respectivement un limiteur de surtension (61) étant relié à la connexion drain (25) et/ou à la connexion source (23) du MOSFET (21, 22).

8. Circuit (1) selon l'une des revendications précédentes, au moins un MOSFET (21, 22) étant ponté par un filtre de surtension (65).

9. Circuit (1) selon l'une des revendications précédentes, les lignes de phase (51, 71) au niveau des connexions de moteur (9, 11) étant respectivement reliées à une liaison à la masse commutable (43) à un potentiel de masse.

10. Circuit (1) selon l'une des revendications précédentes, comportant un convertisseur (10) qui est connecté à la connexion de convertisseur (3) et des moteurs (14, 16), respectivement un moteur étant relié aux connexions de moteur (9, 11) respectives d'au moins deux des liaisons électriques (5, 7).

11. Circuit (1) selon la revendication 10, le convertisseur (10) étant conçu soit comme un convertisseur de fréquence et les moteurs (12, 16) comme des moteurs asynchrones triphasés, soit comme un servo-convertisseur et les moteurs comme des moteurs synchrones triphasés.

12. Utilisation d'un circuit (1) selon l'une des revendications précédentes pour l'alimentation en énergie de manière sélective d'un moteur sélectionné d'une pluralité de moteurs (12, 16).

13. Utilisation selon la revendication 12, les liaisons à la masse commutables (43) associées à une connexion de moteur (9, 11) d'au moins un autre moteur non sélectionné étant commutées de manière conductrice à un potentiel de masse.
